# EUROPEAN PATENT APPLICATION

(11) **EP 0 795 993 A2**
(43) Date of publication of application: **17.09.1997**
(21) Application number: 97104160.3
(22) Date of filing: 12.03.1997
(51) Int. Cl.: H04M 3/50

(54) **Automatic announcement system**

(30) Priority: 12.03.1996 IL 11745496
(71) Applicant: GMA Communication - Manufacturing and Marketing (1991) Ltd., Petah Tikva 49130 (IL)
(72) Inventor: Halperin, Jacob, Kiryat Arieh, Petah Tikva 49130 (IL)
(74) Representative: Modiano, Guido, Dr.-Ing.

(57) **Abstract**

A system and apparatus for telephone operators adapted to assist the operator at work. The system comprises in combination a recording unit, a processor and an interface. The recording unit is provided with recording and playback buttons.

## Description

### FIELD OF INVENTION

The present invention relates to an automatic predetermined telephone answering system and apparatus, and more particularly the invention relates to a system and an apparatus adapted to assist telephone operators in their daily work.

Now-a-days, in each incoming telephone call, the operator usually begins in the following or similar manner: "Gama Communications, good morning/good afternoon, this is John or Alice, how can I help you?" This message must be repeated many many times in a day.

### OBJECT OF THE INVENTION

It is the main object of the present invention to provide a system and apparatus which would assist the operator by making an automatic unanswering announcement.

The apparatus would assist the operator by saving him from opening each incoming telephone call with the same message. The message will be with the operator's voice, a new operator will have to change the message to his voice.
The device will be absolutely independent, however, it could be installed within a telephone set or within the head set or within the hand set or a computer which in some instances is operating a telephone exchange.

The device according to the invention is connected intermediate the head set or hand set and the telephone set or exchange.

### ABSTRACT OF THE INVENTION

According to the invention there is provided a system and apparatus adapted to assist telephone operators which comprises in combination a recording unit, a processor and an interface. The recording unit is provided with a recording button and a playback button.

### SHORT DESCRIPTION OF DRAWINGS

The invention will now be described with reference to the annexed drawings in which:
**Figure 1** is an illustration of the system, while
**Figure 2** is a block diagram thereof.

### DESCRIPTION OF PREFERRED EMBODIMENT

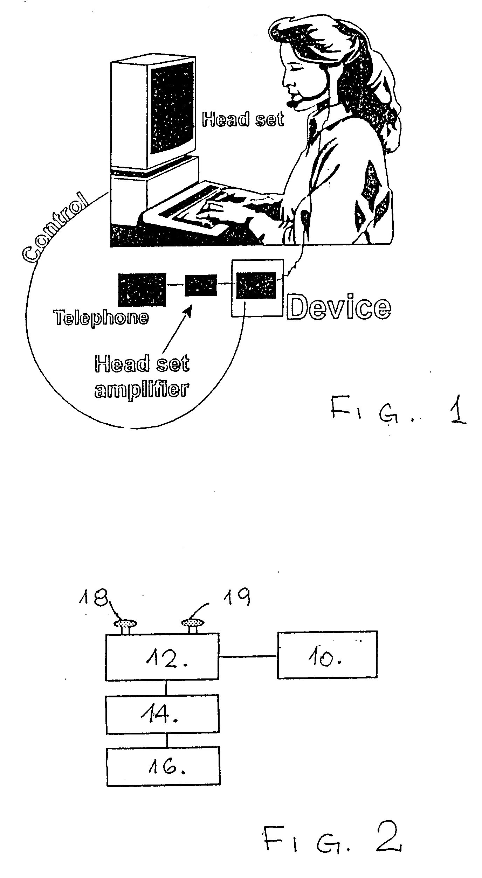

As can be see in **Figure 1**, the operator is using a head set and the apparatus according to the invention is connected intermediate the head set and the telephone.

The block diagram depicted in **Figure 2** illustrates the components of the apparatus, an interface unit **10** to be connected to the head set or hand set, a solid state recording chip **12**, a microprocessor or micro-controller **14**. A host interface **16** could be provided to enable the connection of the apparatus to a central computer.

Operating buttons **18** and **19** are provided for recording a message and for replaying same.

The apparatus functions in the following manner.

The operator at the beginning of his shift would touch the recording button **18** and would record a message, for example, "A.B.C.D. Company, good morning, this is John, may I help you". This message will be played back by the device whenever a new incoming telephone call will be received. The playback will be performed either by touching button **19** or automatically. Once the message has been announced, the operator would "take over" and continue the conversation as required.

It is within the scope of the invention to connect the apparatus to a computer or computer controlled telephone exchange.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. An automatic telephone answering system which comprises a prerecorded playback message apparatus and a head set or hand set connecting means.

2. A system as claimed in claim 1 where said apparatus comprises in combination a recording and playback means a processor or controller and an interface.

3. A system as claimed in claims 1 and 2, where said recording means is a solid state recording chip.

4. A system as claimed in claims 1 to 3, where the system is connected to a computer.

5. Automatic telephone answering system, substantially as hereinbefore described and with reference to the accompanying drawings.
